Europäisches Patentamt

European Patent Office

Office européen des brevets

(11) Publication number: **0 247 657 B1**

(12) **EUROPEAN PATENT SPECIFICATION**

(45) Date of publication of patent specification: **15.01.92** (51) Int. Cl.⁵: **B29C 51/14**

(21) Application number: **87200816.4**

(22) Date of filing: **28.04.87**

(54) **Production of multilayer containers.**

(30) Priority: **16.05.86 US 863754**

(43) Date of publication of application:
**02.12.87 Bulletin 87/49**

(45) Publication of the grant of the patent:
**15.01.92 Bulletin 92/03**

(84) Designated Contracting States:
**BE DE ES FR GB IT NL SE**

(56) References cited:
**US-A- 3 396 062**
**US-A- 3 519 514**
**US-A- 3 523 474**

(73) Proprietor: **SHELL INTERNATIONALE RE-
SEARCH MAATSCHAPPIJ B.V.
Carel van Bylandtlaan 30
NL-2596 HR Den Haag(NL)**

(72) Inventor: **Coffman, Paul Mahoney
1819 Cherry Bend Drive
Houston Texas 77077(US)**

(74) Representative: **Tuijn, Jan Warnaar et al
Shell Internationale Research Maatschappij
B.V., Patents, Licensing & Trade Marks Di-
vision, P.O. Box 302
NL-2501 CH The Hague(NL)**

## Description

This invention is concerned with a method for making containers from multilayer billets with reduced scrap loss.

Containers may be formed by various methods. For example, containers may be formed from "billets"--defined as preformed pieces of material of a form adapted to the solid phase forming or thermoforming machinery, this form being such that no scrap remains after the forming operation.

When billets are formed by punching or cutting out of a multilayer sheet of thermoplastic material, a residual "web" of the uncut material typically represents 35% to 50% of the original uncut sheet. This web is considered "scrap" and is virtually useless because of its multipolymer composition.

For containers made of polypropylene and a laminated barrier polymer, it is the first mentioned polymer that serves as the major component that creates the desired strength or resistance to deforming of the container. The barrier polymer does not essentially contribute to this strength, it serves for another purpose i.e. to create a barrier against the passage of oxygen or moisture through the wall of the container. The barrier polymer layer is therefore relatively thin, whilst a relatively thick polypropylene layer is needed to create adequate strength. When punching or cutting billets from multilayer sheet the major material loss is therefore polypropylene.

The present invention aims at reducing the amount of polypropylene scrap by assembling the billets, before forming the containers, from a) relatively thin preformed billets and b) a monolayer polypropylene sheet. The assembly of billets and monolayer sheet is then passed through the container forming machinery and a web, withdrawn from that machinery, comprises polypropylene as the single polymer. This web is no useless scrap as it can be reprocessed into either multilayer billets or monolayer polypropylene sheet.

This invention therefore relates to a process for making multilayer containers, which comprises the steps of:

    a) producing multilayer billets comprising at least one layer of a barrier polymer;

    b) producing monolayer sheet of polypropylene;

    c) heating said monolayer sheet and said billets to a temperature where the mating surfaces of both said sheet and said billets are at or above the fusion temperature of said mating surfaces;

    d) placing said billets on said sheet, while maintaining said billets and said sheet at or above the mating surface fusion temperature so that said billets and said sheet are welded together; and

    e) forming containers from said welded billets and sheet, leaving a web of monolayer polypropylene sheet and reprocessing this web into either production of billets or monolayer sheet.

Suitable barrier polymers are available on the market, e.g. SARAN®, a polymer of vinylidene dichloride. Preference is given to copolymers of ethylene and vinylalcohol (EVOL) and to - optionally hydrolized - copolymers of ethylene and vinylacetate (EVAL).

Forming the billets and the containers do not form part of this invention since these operations are carried out by means known per se.

Preferred billets are those having the five layer structure: polypropylene/adhesive/EVAL/adhesive/polypropylene.

The best results are obtained with billets having a thickness of 1.2 to 3.8 mm, the optimum thickness of the monolayer polypropylene sheet is within the range of from 0.3 to 1.0 mm.

A convenient way of operating the process of this invention will be clear from the following description:

A sheet of monolayer polypropylene is processed through a radiant oven, multicavity forming press and a down-line punch press. Coextruded, multilayer billets are supplied to the production line immediately after the polypropylene monolayer sheet leaves the radiant oven. The billets are preheated and then positioned on the heated monolayer sheet. To aid at this location, a flat platten with teflon coating is located under the monolayer sheet after the oven. This plate is heated and contains vacuum holes so that the monolayer sheet is sucked flat before an automated device deposits the billets in the exact position corresponding with the container forming machinery cavities. The sheet moves to a forming station where the billets are welded to the sheet. The mating surfaces of the billets and monolayer sheet must be of a material so that when heated, they will weld together. The sheet subsequently moves to the multicavity container forming machinery, the sheet holding the containers, then moves to a punch press which produces on the one hand separate containers and on the other hand a web of polypropylene monolayer sheet. The latter is reground and reprocessed to form polypropylene monolayer sheet.

US-A 3396062 is concerned with a process for thermoforming articles, such as hot beverage containers by positioning discs of cellular foamed thermoplastic material on a thermoplastic backer sheet, heating the sandwich by contacting with a hot surface and thermoforming while utilizing the heat derived from said contact heating. In this known process there is a step of cutting the backer sheet, thus leaving a web of monolayer thermoplastic sheet, however there is no reprocessing of said web. Likewise, there is no processing of barrier polymer and of non-foamed discs.

Example 1

A 2.5 mm thick billet of five layers of polypropylene, adhesive, EVAL, adhesive, and polypropylene was produced in which the polypropylene makes up 80%, the adhesive 10% and EVAL 10%. A monolayer sheet of polypropylene of 0.6 mm was prepared. The monolayer sheet and the billets were combined as set out hereinbefore and each billet was formed into a container. This resulted in containers of 52% polypropylene layer, 4% adhesive layer, 8% EVAL layer, 4% adhesive layer and 32% polypropylene layer.

Example 2

1 mm thick billets of polypropylene/adhesive/EVOL/adhesive/polypropylene, having the same make-up as set out in example 1 were combined with a 1 mm thick polypropylene monolayer sheet. The final juice cups produced upon forming are made of 70% polypropylene, $2\frac{1}{2}$% adhesive, 5% EVOL, $2\frac{1}{2}$% adhesive and 20% polypropylene.

## Claims

1. A process for making multilayer containers, which comprises the steps of:
   a) producing multilayer billets comprising at least one layer of a barrier polymer;
   b) producing monolayer sheet of polypropylene;
   c) heating said monolayer sheet and said billets to a temperature where the mating surfaces of both said sheet and said billets are at or above the fusion temperature of said mating surfaces;
   d) placing said billets on said sheet, while maintaining said billets and said sheet at or above the mating surface fusion temperature so that said billets and said sheet are welded together; and
   e) forming containers from said welded billets and sheet, leaving a web of monolayer polypropylene sheet and reprocessing this web into either production of billets or monolayer sheet.

2. The process in claim 1, wherein said polypropylene monolayer sheet, which has been heated, is sucked flat against a heated plate under said sheet during the placement of said billets on top of the sheet.

3. A process as claimed in claim 1 or 2 in which the barrier polymer is a copolymer of ethylene and vinylalcohol, a copolymer of ethylene and vinylacetate or a hydrolized copolymer of ethylene and vinylacetate.

## Revendications

1. Un procédé pour fabriquer des conteneurs multicouche, qui comportent les étapes de :
   a) réaliser des billettes multicouche comportant au moins une couche d'un polymère barrière ;
   b) réaliser une feuille monocouche de propylène ;
   c) chauffer ladite feuille monocouche et lesdites billettes à une température où les surfaces de jointoiement de ladite feuille et desdites billettes sont à ou au-dessus de la température de fusion desdites surfaces de jointoiement ;
   d) placer lesdites billettes sur ladite feuille, tout en maintenant lesdites billettes et ladite feuille à ou au-dessus de la température de fusion de ladite surface de jointoiement, de sorte que lesdites billettes et ladite feuille sont soudées les unes aux autres ; et
   e) former des conteneurs à partir desdites billettes et de ladite feuille soudées, conserver une bande de feuille monocouche en propylène et traiter à nouveau cette bande pour réaliser soit des billettes, soit une feuille monocouche.

2. Le procédé de la revendication 1, dans lequel ladite feuille monocouche de polypropylène, qui a été chauffée, est aplatie par aspiration contre une plaque chauffée sous ladite feuille pendant la disposition desdites billettes sur la face supérieure de la feuille.

3. Un procédé tel que revendiqué dans la revendication 1 ou 2, dans lequel le polymère barrière est un copolymère d'éthylène et d'alcool vinylique, un copolymère d'éthylène et d'acétate de vinyle ou un copolymère hydrolysé d'éthylène et d'acétate de vinyle.

## Patentansprüche

1. Ein Verfahren zur Herstellung eines Mehrlagen-Behälters, umfassend die folgenden Verfahrensschritte:

   a) Herstellung von Mehrlagen-Rohlingen, umfassend mindestens eine Schicht aus einem Sperrschichtpolymer;
   b) Herstellung einer Einlagenfolie aus Polypropylen;

c) Erhitzen der genannten Einlagenfolie und der genannten Rohlinge auf eine Temperatur, wobei die Temperatur der aufeinandertreffenden Oberflächen der genannten Folie und der genannten Rohlinge bei oder oberhalb der Schmelztemperatur der genannten aufeinandertreffenden Oberflächen liegt;

d) Anordnen der genannten Rohlinge auf der genannten Folie, wobei die genannten Rohlinge und die genannte Folie auf einer Temperatur gehalten werden, die gleich der oder höher als die Schmelztemperatur der aufeinandertreffenden Oberflächen ist, so daß die genannten Rohlinge und die genannte Folie zusammengeschweißt werden; und

e) Bilden von Behältern aus den genannten mit der Folie verschweißten Rohlingen, unter Zurücklassen einer Bahn der Einlagen-Polypropylen-Folie und Wiederverwendung dieser Bahn entweder bei der Herstellung von Rohlingen oder bei der Herstellung der Einlagenfolie.

2. Das Verfahren nach Anspruch 1, in welchem die genannte Polypropylen-Einlagen-Folie, die erhitzt worden ist, während der Anordnung der genannten Rohlinge auf der Oberseite der Folie flach an eine erhitzte Platte unter der genannten Folie angedrückt(angesaugt) wird.

3. Ein Verfahren nach Anspruch 1 oder 2, in welchem das Sperrschichtpolymer ein Copolymer aus Äthylen und Vinylalkohol, ein Copolymer aus Äthylen und Vinylacetat oder ein hydrolysiertes Copolymer aus Äthylen und Vinylacetat ist.